(19) Europäisches Patentamt

European Patent Office

Office européen des brevets

(11) **EP 0 697 657 B1**

## (12) FASCICULE DE BREVET EUROPEEN

(45) Date de publication et mention
de la délivrance du brevet:
**12.01.2000 Bulletin 2000/02**

(51) Int Cl.⁷: **G06F 9/46**

(21) Numéro de dépôt: **95401867.7**

(22) Date de dépôt: **09.08.1995**

(54) **Procédé pour ordonnancer des tâches successives qui ne subissent que des contraintes du type délais**

Verfahren für die Ablauffolgeplanung von aufeinanderfolgenden Aufgaben mit Zeitzwangsbedingungen

Scheduling method for successive tasks with time constraints

(84) Etats contractants désignés:
**AT BE CH DE DK ES GB IT LI NL SE**

(30) Priorité: **11.08.1994 FR 9409952**

(43) Date de publication de la demande:
**21.02.1996 Bulletin 1996/08**

(73) Titulaire: **CEGELEC**
**92309 Levallois-Perret (FR)**

(72) Inventeur: **Dworzecki, Jozef**
**F-78330 Fontenay le Fleury (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
- **IEEE TRANSACTIONS ON SOFTWARE ENGINEERING, vol.SE-13, no.5, Mai 1987, NEW YORK US pages 564 - 576 WEI ZHAO ET AL.: 'Scheduling Tasks with Resource Requirements in Hard Real-Time Systems'**
- **REAL TIME SYSTEMS, vol.1, no.1, Juin 1989, DORDRECHT, NL pages 27 - 60 BRINKLEY SPRUNT ET AL. : 'Aperiodic Task Scheduling for Hard-Real-Time Systems'**
- **PROCEEDINGS OF THE IEEE, vol.82, no.1, Janvier 1994, NEW YORK, US pages 55 - 67 KRITHI RAMAMRITHAM ET AL.: 'Scheduling Algorithms and Operating Systems Support for Real-Time Systems'**

EP 0 697 657 B1

**Description**

L'invention concerne un procédé pour ordonnancer des tâches successives, au moyen d'un ordinateur, en déterminant un ordre d'exécution de ces tâches et un instant de début d'exécution pour chaque tâche, deux tâches ne devant jamais être exécutées simultanément. Cet ordonnancement est réalisé en fonction d'une pluralité de contraintes que doivent satisfaire les tâches. Ce procédé concerne plus particulièrement les applications où il n'y qu'un seul type de contrainte, des contraintes de délais : l'exécution d'une tâche doit commencer à un instant compris dans au moins un intervalle de temps prédéterminé par rapport à un instant de référence absolue. Il n'y a pas de contraintes portant directement sur l'ordre des tâches. Naturellement, ce procédé concerne aussi les applications où toutes les contraintes peuvent être considérées comme équivalentes à des contraintes de type délais par rapport à une référence absolue.

Le procédé selon l'invention est applicable notamment à des tâches qui doivent être exécutées successivement parce qu'elles sont exécutées par un moyen unique capable de n'exécuter qu'une seule tâche à la fois, par exemple : une machine outil, un bus informatique, ou une équipe de travailleurs. Dans le domaine de l'informatique, il peut être appliqué à la gestion d'une pluralité de tâches prédéterminées à exécuter successivement dans un même processeur ou sur un même bus. Dans le domaine du contrôle-commande industriel, il peut être appliqué notamment à la gestion d'un bus dit de terrain, utilisé pour transmettre des informations successivement selon un ordonnancement prédéterminé.

De nombreux procédés d'ordonnancement sont déjà connus :

- les méthodes dites pôlynomiales ou de circuits critiques;
- les méthodes de programmation linéaire, notamment la méthode du simplex, sur laquelle est fondée le langage PROLOG III;
- les méthodes de programmation dynamique, qui ne peuvent être appliquées qu'à des problèmes de taille assez faible;
- et les méthodes heuristiques, qui utilisent certains algorithmes des méthodes citées ci-dessus, mais qui consistent en outre à réduire le nombre de cas à vérifier, en simplifiant certaines contraintes; la solution obtenue étant alors non optimale.

Les procédés connus ont deux inconvénients : ils nécessitent une durée de calcul importante parce qu'ils vérifient systématiquement un très grand nombre de permutations avant de fournir une solution. La durée de calcul est généralement proportionnelle à la fonction factorielle du nombre de tâches à ordonnancer.

Pour ordonnancer des tâches répétitives, les procédés connus déterminent la durée d'un macro-cycle égal au plus petit commun multiple de toutes les périodes des tâches, et déterminent la durée d'un micro-cycle égal au plus grand commun diviseur de toutes les périodes des tâches, puis ils cherchent une permutation des tâches telle que toutes les contraintes soient satisfaites simultanément, en essayant toutes les permutations possibles jusqu'à en trouver une vérifiant cette condition, en faisant les vérifications micro-cycle par micro-cycle. Lorsqu'un conflit apparaît dans un micro-cycle la permutation en cours de vérification est abandonnée, et une autre est essayée. Le travail effectué pour la vérification de cette permutation pendant les micro-cycles précédents devient inutile parce que toutes les contraintes satisfaites précédemment sont remises en cause.

Les procédés connus sont donc peu pratiques à mettre en oeuvre dans des applications industrielles.

Le but de l'invention est de proposer un procédé d'ordonnancement qui n'ait pas ces inconvénients, afin d'obtenir plus rapidement une solution à un problème d'ordonnancement statique, mais aussi pour permettre de traiter des problèmes d'ordonnancement dynamique, c'est-à-dire redéterminer un ordonnancement au fur et à mesure de l'évolution du nombre de tâches à ordonnancer et de l'évolution des contraintes portant sur ces tâches. Un tel ordonnancement dynamique peut être utile par exemple pour ordonnancer des tâches d'usinage sur une machine outil, lorsque les produits à fabriquer sont très diversifiés; pour ordonnancer les décollages ou les atterrissages d'avions sur une piste d'aéroport; pour ordonnancer des tâches sur un bus ou un processeur informatique; etc.

L'objet de l'invention est un procédé pour ordonnancer des tâches successives au moyen d'un ordinateur, certaines tâches devant satisfaire des contraintes; chaque contrainte consistant en ce que l'instant $t^K_{deb}$ de début d'exécution doit être compris dans au moins un intervalle de temps $[t^K_{min}, t^K_{max}]$ prédéterminé par rapport à un instant de référence absolue;

caractérisé en ce qu'il consiste à :

- considérer que toutes les tâches sont répétitives, et à réduire l'intervalle de temps sur lequel l'ordonnancement est à déterminer, en réduisant cet intervalle à un micro-cycle dont la durée est égale au plus grand commun diviseur de toutes les périodes de répétition des tâches; et en recherchant un ordonnancement tel que si toutes les tâches sont exécutées au cours d'un même micro-cycle elles satisfassent toutes les contraintes;

- calculer, pour chaque tâche, les bornes $t_{min}$ et $t_{max}$ de l'intervalle où doit commencer l'exécution de cette tâche pour satisfaire toutes les contraintes portant sur cette tâche;
- constituer une première suite dans laquelle toutes les tâches sont ordonnées selon les valeurs de $t_{min}$ croissantes ;
- constituer une seconde suite dans laquelle toutes les tâches sont ordonnées selon les valeurs de $t_{max}$ croissantes;
- constituer une permutation dite initiale, en ordonnançant les tâches dans l'ordre de la première suite;
- vérifier si la permutation initiale satisfait toutes les contraintes portant sur toutes les tâches;
- conclure que l'ordonnancement est un succès si toutes les contraintes sont satisfaites;
- sinon, déterminer dans la permutation initiale la première tâche, dite mal placée, pour laquelle une contrainte n'est pas satisfaite;
- déterminer dans la seconde suite une tâche dite candidate qui précède immédiatement la tâche mal placée, dans cette seconde suite et qui précède aussi la tâche mal placée, dans la permutation courante;
- vérifier que, si la tâche candidate est déplacée dans la permutation courante pour être placée immédiatement après la tâche mal placée, toutes les contraintes portant sur les tâches ainsi déplacées sont alors satisfaites; et

-- si au moins une contrainte n'est pas satisfaite, conclure que la tâche candidate ne convient pas, puis déterminer dans la seconde suite une autre tâche candidate et réitérer la vérification précédente; et si, ce n'est pas possible, conclure que l'ordonnancement a échoué;
-- si toutes les contraintes sont satisfaites, conclure que l'ordonnancement est un succès.

Le procédé ainsi caractérisé présente l'avantage d'être particulièrement rapide parce qu'en cas d'échec pour l'ordonnancement d'une tâche, il consiste à déplacer une ou plusieurs tâches précédant la tâche où l'ordonnancement est en échec, sans remettre en cause systématiquement toutes les contraintes déjà satisfaites, et donc sans remettre en cause l'intégralité du travail effectué précédemment. Cette caractéristique réduit considérablement le temps de calcul par rapport à tout procédé qui consisterait à explorer systématiquement toutes les possibilités d'ordonnancement.

D'autre part, ce procédé est plus rapide que les procédés connus, lorsqu'il y a des tâches répétitives, car les permutations sont vérifiées sur un seul microcycle. Enfin, ce procédé est applicable à l'ordonnancement d'un système dans lequel plusieurs tâches peuvent être effectivement réalisées en parallèle. Il consiste alors à décomposer ce système en plusieurs sous-systèmes parallèles dans lesquels les tâches doivent toutes être exécutées successivement; et en appliquant le procédé selon l'invention pour chacun des sous-systèmes ainsi déterminés.

Le procédé selon l'invention sera mieux compris et d'autres caractéristiques apparaîtront à l'aide de la description ci-dessous d'un exemple de mise en oeuvre, et des figures l'accompagnant :

- la figure 1 représente le schéma synoptique d'un système dans lequel le procédé selon l'invention est mis en oeuvre pour déterminer dynamiquement un ordonnancement;
- les figures 2 et 3 illustrent une étape du procédé selon l'invention, pour prendre en compte le caractère périodique de certaines tâches;
- les figures 4 à 7 illustrent les principes de base du procédé selon l'invention;
- la figure 8 représente l'organigramme d'un exemple de mise en oeuvre du procédé selon l'invention;
- les figures 9 à 16 représentent des chronogrammes illustrant la mise en oeuvre de l'organigramme représenté sur la figure 8;
- les figures 17 à 26 illustrent la mise en oeuvre du procédé selon l'invention pour ordonnancer un exemple de tâches.

Le procédé selon l'invention peut être mis en oeuvre aussi bien pour déterminer un ordonnancement statique, que pour déterminer un ordonnancement dynamique. Mais la réduction de la durée de calcul qu'il procure est particulièrement avantageuse pour déterminer un ordonnancement dynamique, puisqu'elle permet de prendre en compte en temps réel des changements de contraintes ou de tâche.

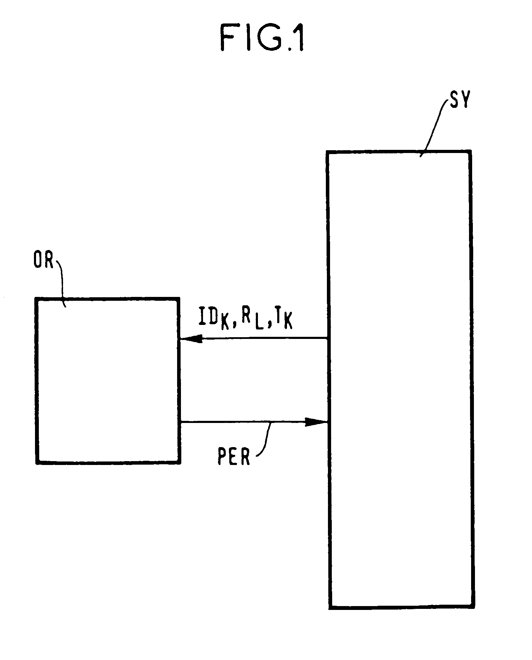

La figure 1 représente le schéma synoptique d'un exemple de dispositif mettant en oeuvre le procédé selon l'invention pour l'ordonnancement dynamique de tâches de production industrielle par exemple.

Ce dispositif comporte un ordinateur OR couplé à un système de production SY. Ce système de production SY fournit à une entrée de l'ordinateur SY les paramètres nécessaires pour déterminer un ordonnancement : l'identité $ID_K$ de chaque tâche, et la période éventuelle $T_K$ de chaque tâche, et la définition $R_L$ de chaque contrainte à satisfaire. Ces paramètres sont fournis chaque fois qu'un changement intervient dans la nature des tâches à exécuter ou dans les contraintes.

L'ordinateur détermine alors une nouvelle permutation PER, et le système de production SY exécute ensuite les tâches conformément à cette nouvelle permutation.

Les tâches sont généralement exécutées par différents dispositifs que comporte le système SY. L'ordinateur OR doit être programmé aussi pour transmettre à chaque dispositif une information lui indiquant les instants où il peut exécuter une tâche. La programmation de l'ordinateur OR pour le mettre en oeuvre le procédé selon l'invention et pour la transmission à chaque dispositif d'une information est à la portée de l'Homme de l'Art, et ne sera pas décrite au-delà de la description du procédé lui-même. De même, les moyens matériels pour coupler un ordinateur OR à un système SY comportant différents dispositifs aptes à réaliser respectivement différentes tâches, est à la portée de l'Homme de l'Art.

Le procédé selon l'invention n'est pas limité aux applications où l'ordonnancement est statique. Les mêmes étapes permettent de déterminer en temps réel un ordonnancement dynamique.

Chaque contrainte porte seulement sur l'instant de début d'exécution, qui doit être compris dans un intervalle donné $[t_{min}, t_{max}]$. L'exécution peut continuer au-delà de la borne d'un intervalle, elle doit seulement respecter la durée fixée. Lorsque plusieurs contraintes de type délais portent sur une même tâche, elles peuvent être remplacées par une seule contrainte dont l'intervalle [tmin, tmax] est l'intersection des intervalles correspondant respectivement à ces contraintes.

Une étape préliminaire du procédé selon l'invention consiste à réduire le nombre de permutations à vérifier, en ne vérifiant l'ordonnancement des tâches que pendant un micro-cycle qui est le plus grand commun diviseur de toutes les périodes de répétition des tâches. En effet, si on arrive à trouver une permutation telle que si toutes les tâches sont exécutées au cours d'un même micro-cycle et qu'elles satisfassent toutes les contraintes, alors cette permutation ne provoquera aucun conflit au cours d'aucun des micro-cycle constituant un macro-cycle, puisque le pire des cas est celui où toutes les tâches tombent dans un même micro-cycle à cause de la coïncidence des multiples de leurs périodes.

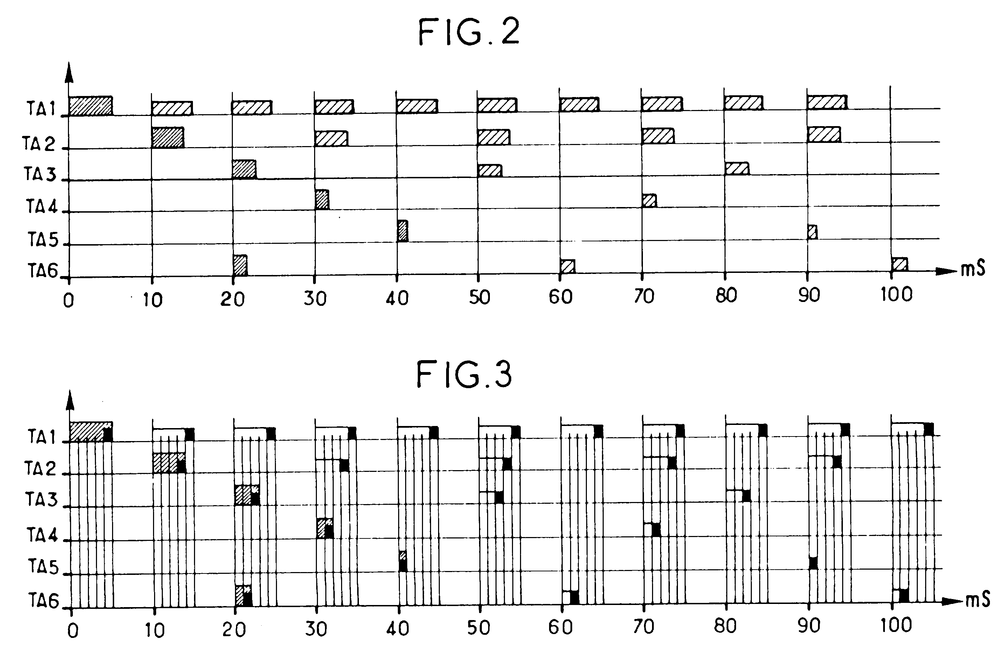

Les figures 2 et 3 illustrent cette étape préliminaire du procédé selon l'invention. Il est à noter que dans le cas où une ou plusieurs tâches ne sont pas considérées à priori comme répétitive, il suffit de leur attribuer une valeur de période commune choisie arbitrairement mais telle qu'elle facilite la détermination d'un micro-cycle. Il suffit donc de déterminer la valeur du plus grand commun diviseur des périodes des tâches répétitives puis de choisir un multiple de cette valeur pour constituer une période commune à toutes les tâches non répétitives.

Les figure 2 et 3 illustrent un exemple où il faut ordonnancer 6 tâches T1, ..., T6 périodiques, respectivement avec des périodes égales à 10 ms, 20 ms, 30 ms, 40 ms, 50 ms, 40 ms. La durée d'exécution est uniforme pour toutes les tâches et est égale à 1 ms.

La figure 2 représente en grisé les intervalles de temps $[t_{min}, t_{max}]$ pour chacune de ces tâches.

Ces intervalles sont les suivants :

TA1 $[t_{min}, t_{max}]$ = [O, 4 ms] modulo 10 ms
TA2 [10, 13 ms] modulo 20 ms
TA3 [20, 23 ms] modulo 30 ms
TA4 [30, 32 ms] modulo 40 ms
TA5 [40, 41 ms] modulo 50 ms
TA6 [20, 22 ms] modulo 40 ms

Ces tâches ont un macro-cycle égal au plus petit commun multiple de leur période, c'est-à-dire 600 ms. Un macro-cycle peut être découpé en 60 micro-cycles de 10 ms. Deux tâches répétitives peuvent être en conflit si elles sont à exécuter au cours d'un même micro-cycle. Par exemple, les tâches TA1, TA3, TA6 doivent être exécutées au cours d'un même micro-cycle $[20_{ms}, 30_{ms}]$ puis $[120_{ms}, 140_{ms}]$, etc.

Pour déterminer un ordonnancement qui conviennent dans le pire cas, il suffit de considérer un micro-cycle où toutes les tâches sans exception devraient être exécutées une fois. En pratique, les tâches ne tombent pas toutes dans un même micro-cycle. On considère un cas fictif où cet évènement serait réalisé.

Une translation temporelle peut ramener l'instant d'exécution de chaque tâche dans l'intervalle d'un même micro-cycle [O, 10ms]. Elle est définie par la formule :

$$t_{deb}^{Kfictif} = t_{deb}^{K} - k.PGCD$$

où $t_{deb}^{Kfictif}$ est l'instant fictif de début d'exécution d'une tâche K;
où $t_{deb}^{K}$ est l'instant réel de début d'exécution de la tâche K;
où PGCD est la durée d'un micro-cycle, c'est-à-dire le plus grand commun diviseur des périodes;
et où k est un nombre entier tel que l'instant fictif $t_{deb}^{Kfictif}$ de début d'exécution de la tâche K est ramené dans le micro-cycle choisi, en l'occurence [O,10 ms].

L'intervalle $[t_{min}^{K}, t_{max}^{K}]$ défini par toutes les contraintes portant sur la tâche K est donc translaté lui aussi de -k.PGCD.

Le procédé d'ordonnancement selon l'invention est ensuite appliqué dans cet intervalle [O, 10ms]. Lorsqu'une permutation satisfaisant toutes les contraintes a été déterminée, les instants d'exécution réels $t^K_{deb}$ sont déduits des instants fictifs de début d'exécution, par la formule

$$t^K_{deb} = t^{Kfictif}_{deb} + k.PGCD \text{ modulo la période de la tâche K.}$$

La figure 3 représente l'ordonnancement des tâches ainsi obtenu, sur l'intervalle O à 100 ms, l'intervalle 100 à 600 ms n'étant pas représenté mais ayant un ordonnancement analogue. Chaque intervalle d'exécution est représenté en noir. Considérons à titre d'exemple l'intervalle 20 à 30 ms dans lequel il peut y avoir conflit entre les tâches TA1, TA3, et TA6. La tâche TA1 est exécutée pendant l'intervalle 23 à 24 ms. La tâche TA3 est exécutée pendant l'intervalle 22 à 23 ms. La tâche TA6 est exécutée pendant l'intervalle 21 à 22 ms. Ainsi il n'y a jamais exécution simultanée de TA1 et TA3 ou TA6, quel que soit le micro-cycle considéré, parmi les 60 micro-cycles constituant le macro-cycle [O, 600ms].

D'autre part, si dans une application certaines tâches peuvent être exécutées simultanément, cette étape préliminaire consiste en outre à rassembler les tâches en plusieurs sous-ensembles indépendants, si c'est possible, chaque sous-ensemble ne rassemblant que des tâches liées entre elles par des contraintes. Le fait d'ordonnancer plusieurs sous-ensembles indépendamment, est plus rapide que d'ordonnancer un seul ensemble plus complexe.

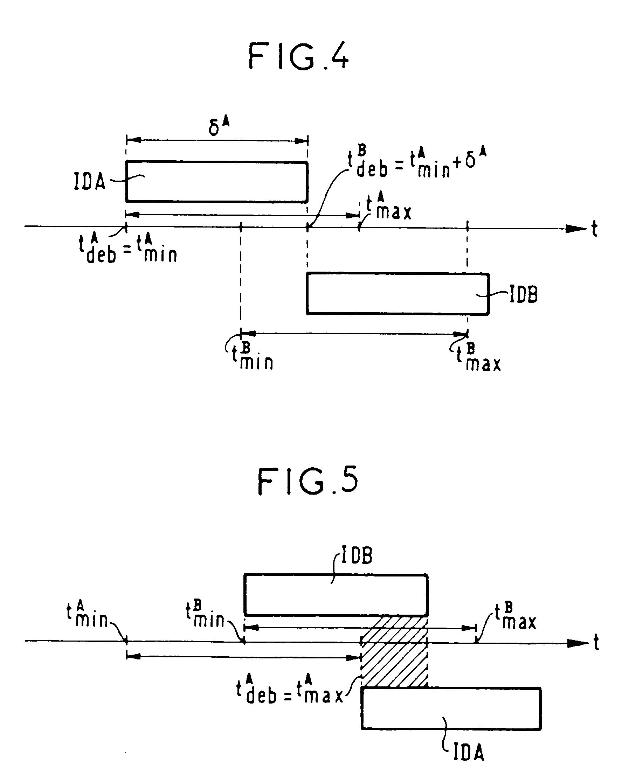

Les figures 4 à 7 illustrent les principes de base du procédé selon l'invention pour ordonnancer toutes les tâches d'un ensemble de tâches en minimisant le nombre de permutations à vérifier. Cette procédure s'achève avec succès si elle a déterminé une permutation constituant un ordonnancement satisfaisant toutes les contraintes portant sur ces tâches.

La figure 4 représente un chronogramme illustrant un premier principe de base du procédé selon l'invention. Ce premier principe impose d'exécuter en priorité les tâches pour lesquelles l'intervalle de temps commence le plus tôt, c'est-à-dire avec une valeur $t_{min}$ la plus petite. En pratique, la permutation initiale des tâches, c'est-à-dire la première permutation à vérifier, sera constituée par une suite référencée MIN-SUITE, dans laquelle les tâches sont rangées selon l'ordre croissant des valeurs de $t_{min}$.

La figure 4 représente par des rectangles IDA et IDB deux intervalles de temps attribués respectivement à l'exécution d'une tâche A et à l'exécution d'une tâche B. Des contraintes imposent que la tâche A commence à être exécutée à l'intérieur d'un intervalle $[t^A_{min}, t^A_{max}]$ ou, à la limite, à l'instant $t^A_{max}$. Elles imposent que la tâche B commence à être exécutée à l'intérieur d'un intervalle $[t^B_{min}, t^B_{max}]$ ou, à la limite, à l'instant $t^B_{max}$. Dans cet exemple $t^A_{min}$ est inférieur à $t^B_{min}$. Le premier principe de base consiste à exécuter la tâche A en premier, en décalant l'intervalle pendant lequel dure cette exécution, le plus près possible de la borne inférieure $t^A_{min}$; puis à exécuter la tâche B pendant un intervalle IDB commencant le plus près possible de la borne inférieure $t^B_{min}$ sans chevaucher l'intervalle IDA. Dans cet exemple, l'intervalle IDA a une durée $\delta^A$ qui déborde sur l'intervalle $[t^B_{min}, t^B_{max}]$, par conséquent les intervalles IDA et IDB seront le plus rapprochés possible en choisissant :

$$t^B_{\ deb} = t^A_{\ min} + \delta^A$$

La figure 5 représente, sur le même exemple, les conséquences d'une non-application de ce principe de base, c'est-à-dire faire exécuter la tâche B avant la tâche A. L'intervalle d'exécution IDB débute alors le plus tôt possible c'est-à-dire à la borne inférieure de l'intervalle $[t^B_{min}, t^B_{max}]$. L'intervalle d'exécution IDA devrait commencer après la fin de l'intervalle d'exécution IDB pour ne pas chevaucher l'intervalle IDA, mais dans cet exemple l'intervalle d'exécution IDB a une longueur telle qu'il dépasse l'instant $t^A_{max}$ qui constitue la borne supérieure de l'intervalle où il est permis de commencer l'exécution de la tâche A. Au mieux, la tâche A pourrait commencer à l'instant $t^A_{deb} = t^A_{max}$, mais alors il y a chevauchement des deux intervalles d'exécution IDB et IDA. La zone de chevauchement est hâchurée sur la figure 5.

Il apparaît donc dans cet exemple que le non-respect du premier principe augmente la probabilité de ne pas satisfaire certaines contraintes.

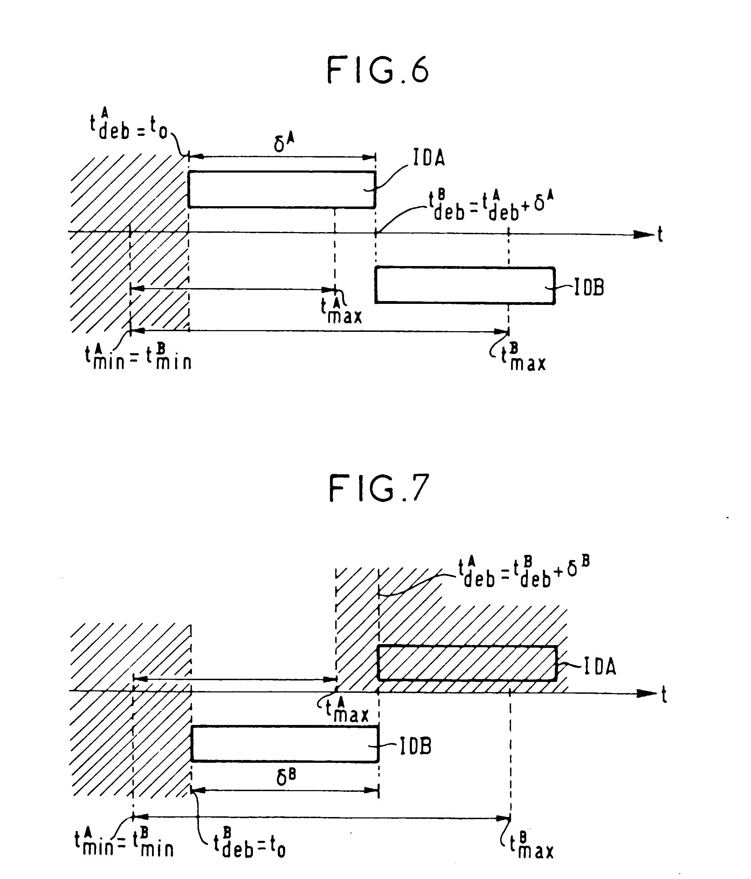

La figure 6 représente un chronogramme illustrant un deuxième principe de base du procédé selon l'invention. Ce principe de base permet de choisir quelle est la tâche à exécuter en priorité parmi plusieurs tâches pour lesquelles la borne inférieure $t_{min}$ a la même valeur. Ce second principe impose, dans ce cas, d'exécuter en priorité la tâche pour laquelle la borne supérieure $t_{max}$ est la plus petite.

Dans l'exemple représenté sur la figure 6, deux tâches A et B ont la même borne inférieure $t^A_{min} = t^B_{min}$, pour l'intervalle de temps dans lequel doit commencer l'exécution. Par ailleurs, des contraintes imposées par l'existence d'autres intervalles d'exécution non représentés, interdisent l'exécution des tâches A et B avant un instant $t_0$ postérieur

à $t^A_{min} = t^B_{min}$, dans un intervalle de temps représenté par des hâchures. Les intervalles d'exécution IDA et IDB ne peuvent donc commencer qu'à partir de cet instant $t_O$. Pour la tâche B, la borne supérieure $t^B_{max}$ est supérieure à la borne supérieure $t^A_{max}$ correspondant à la tâche A. Selon le deuxième principe de base, il faut exécuter en priorité la tâche A. La tâche B est exécutée ensuite à partir d'un instant :

$$t^B_{deb} = t^A_{min} + \delta^A.$$

Ainsi les deux intervalles d'exécution IDA et IDB se succèdent sans problème particulier dû à la borne supérieure $t^B_{max}$.

La figure 7 illustre sur le même exemple, un conflit qui a plus de chance de se produire si le deuxième principe n'est pas respecté. La tâche B est exécutée en premier, à partir de l'instant $t^B_{deb}$ qui coïncide avec la fin $t_0$ de l'intervalle interdit représenté par des hâchures. Ensuite la tâche A devrait être exécutée à partir d'un instant $t^A_{deb} = t^B_{min} + \delta^A$ pour éviter un chevauchement des intervalles IDA et IDB, mais cet instant $t^A_{deb}$ se trouverait alors dans une zone interdite, hâchurée sur la figure, située après la borne supérieure $t^A_{max}$ de l'intervalle où doit commencer cette exécution. Il y a donc une contrainte qui n'est pas satisfaite. Il apparaît donc dans cet exemple que le non-respect du deuxième principe augmente la probabilité de ne pas satisfaire certaines contraintes.

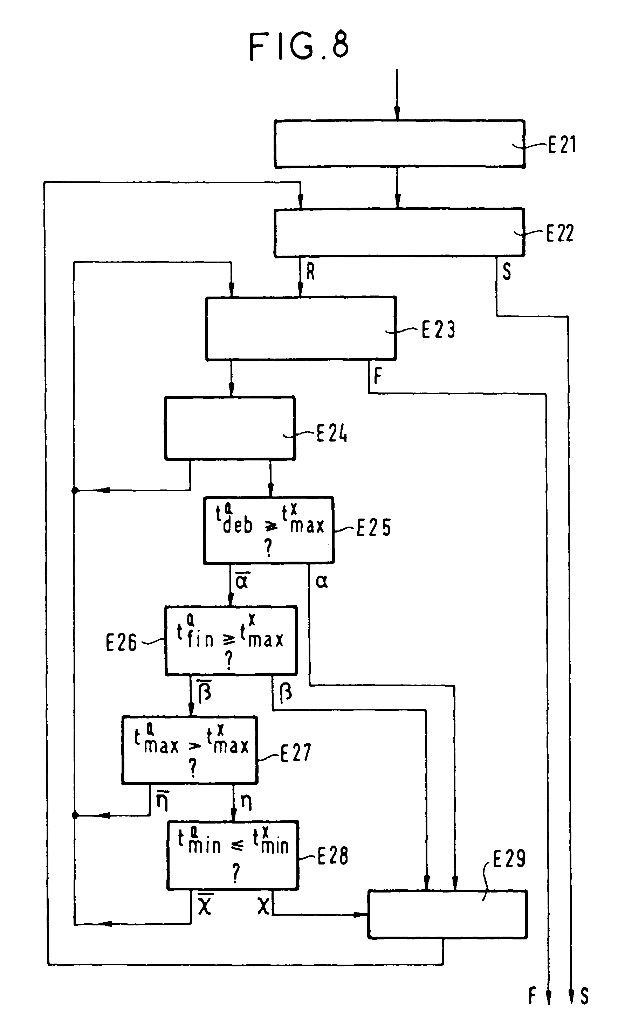

La figure 8 représente un organigramme d'un exemple préférentiel de mise en oeuvre du procédé selon l'invention. Il consiste tout d'abord en une étape E21 consistant à déterminer la suite MIN-SUITE constituée de toutes les tâches ordonnées selon les valeurs croissantes de la borne inférieure $t_{min}$. Cette suite sera utilisée pour appliquer le premier principe énoncé précédemment. Pour maximiser la probabilité d'arriver rapidement à trouver une permutation qui satisfasse toutes les contraintes portant sur toutes les tâches, la permutation initiale est constituée par MIN-SUITE; et les permutation qui seront vérifiées ensuite, en cas d'échec, seront déduites de MIN-SUITE, par des modifications successives.

D'autre part, l'étape E21 consiste à déterminer la suite MAX-SUITE, constituée de toutes les tâches ordonnées selon les valeurs croissantes de la borne supérieure $t_{max}$. Cette suite sera utilisée pour appliquer le second principe énoncé précédemment, lorsqu'il faudra modifier la permutation initiale.

Puis une étape E22 consiste à vérifier la permutation courante, c'est-à-dire vérifier si elle satisfait toutes les contraintes portant sur toutes les tâches. Au début, la permutation courante est constituée par la permutation initiale déterminée par l'étape E21.

Cette vérification consiste à prendre successivement chaque tâche dans l'ordre de la permutation courante et à vérifier que l'intervalle d'exécution $[t_{deb}, t_{fin}]$ imposé par la position occupée par cette tâche dans la permutation courante est compatible avec l'intervalle de temps $[t_{min}, t_{max}]$ imposé par les contraintes qui portent sur cette tâche. La tâche pour laquelle cette vérification est en cours est appelée tâche courante. Si cette vérification est positive pour chacune des tâches, cela signifie que la permutation courante est un succès, noté S.

Si la vérification rencontre au moins une tâche dont la position dans la permutation impose de commencer l'exécution à un instant $t_{deb}$ qui n'est pas dans l'intervalle de temps $[t_{min}, t_{max}]$ imposé par les contraintes, cette tâche est considérée comme mal placée, puisqu'il y a un conflit entre deux contraintes. Quand l'étape E22 trouve une tâche, notée X, qui est la première mal placée dans la permutation courante, elle tire la conclusion, notée R, qu'il est nécessaire de chercher une tâche candidate à un déplacement pour constituer une nouvelle permutation. Le procédé consiste alors à exécuter une étape E23 qui recherche la tâche précédant immédiatement la tâche courante X dans la suite MAX-SUITE. S'il n'existe pas une telle tâche, l'étape E23 se termine par un échec, noté F.

Si l'étape E23 trouve une tâche candidate Q précédant immédiatement la tâche courante X dans la suite MAX-SUITE, le procédé consiste ensuite en une étape E24 vérifiant que cette tâche Q a déjà été considérée comme bien placée, au cours d'une étape E21 antérieure. Toutes les tâches qui sont considérées comme bien placées sont celles qui ont un rang inférieur à celui de la tâche courante X, puisque la vérification de l'étape E22 est faite selon les rangs croissants dans la permutation courante. Par conséquent, l'étape E24 consiste tout simplement à vérifier que la tâche candidate Q précède la tâche courante X dans la permutation courante. Si l'étape E24 détermine que la tâche Q n'a pas été considérée comme bien placée, l'étape E23 est réitérée pour rechercher une autre tâche candidate, précédant immédiatement la tâche Q dans MAX-SUITE.

Au contraire, si la tâche candidate Q a été considérée comme bien placée, le procédé consiste à exécuter une étape E25 qui consiste à comparer l'instant $t^Q_{deb}$ du début d'exécution de la tâche Q à l'instant $t^X_{max}$ qui est la borne supérieure de l'intervalle de temps correspondant à la tâche courante X.

Si $t^Q_{deb} \geq t^X_{max}$, c'est le cas noté $\alpha$. L'étape suivante est alors une étape E29 consistant à déplacer la tâche Q dans la permutation courante, pour l'insérer entre la tâche courante X et la tâche suivant la tâche X dans la permutation courante. Les tâches qui étaient placées entre Q et X, et la tâche X elle-même, sont décalées d'un rang, vers les rangs inférieurs, pour combler la place laissée libre par Q. Par conséquent, la tâche Q occupe désormais la position qui était celle de X. Le procédé consiste ensuite à réitérer l'étape E22 pour vérifier si la nouvelle permutation courante ainsi obtenue satisfait toutes les contraintes. Il est à noter que la tâche Q et toutes les autres tâches qui la suivaient ont été déplacées. Elles ne peuvent plus être considérées comme ayant été bien placées car elles ne satisfont pas forcément toutes les contraintes dans leurs nouvelles positions respectives. Les tâches de rang inférieur à Q gardent la même position, donc il n'est pas nécessaire de vérifier qu'elles satisfont toutes les contraintes portant sur elles, le travail de vérification de ces contraintes n'est donc pas refait.

Si $t^Q_{deb} < t^X_{max}$ c'est le cas noté $\bar{\alpha}$, décrit plus loin et le procédé consiste ensuite en une étape E26.

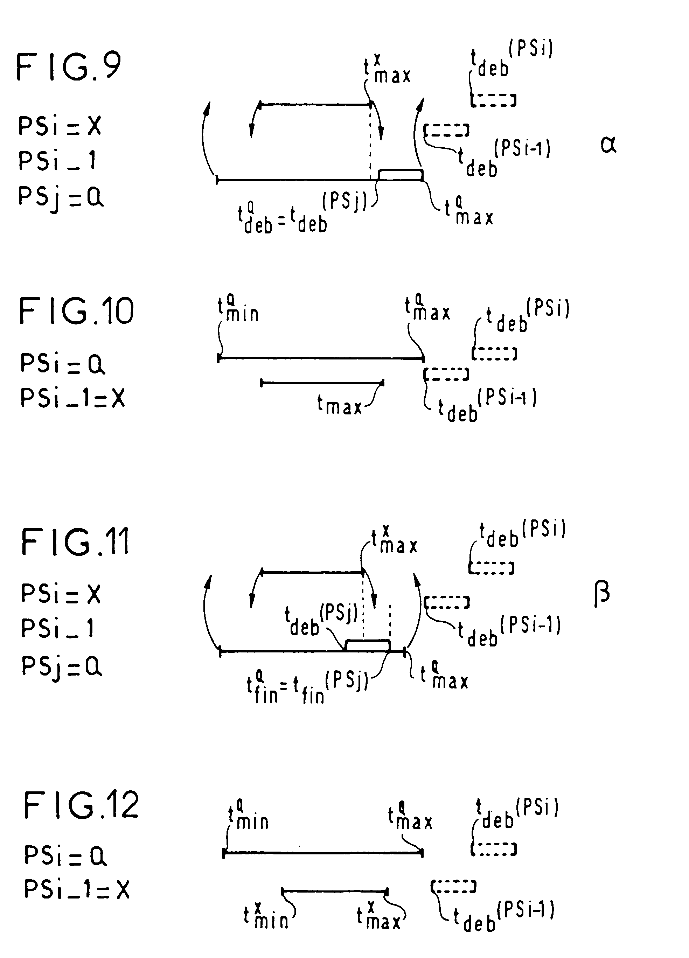

La figure 9 illustre par un exemple le cas $\alpha$. Les intervalles d'exécution sont représentés en pointillés lorsqu'un conflit empêche une exécution, et en traits continus dans le cas contraire.

Considérons une tâche X qui est dans une position PSi de la permutation courante, et une tâche Q considérée comme bien placée, qui est dans une position PSj de la permutation courante. La position PSi impose le début de l'exécution de la tâche X à un instant $t_{deb}(PSi)$ qui est au-delà de la borne $t^X_{max}$. La position PSj impose le début de l'exécution de la tâche Q à un instant $t_{deb}(PSj)$ qui est, dans cet exemple, au-delà de l'instant $t^X_{max}$. L'instant $t^Q_{deb}$ (PSj) étant au-delà de l'instant $t^X_{max}$, la borne $t^Q_{max}$ est donc à fortiori supérieure ou égale à $T^X_{max}$, et a donc des chances d'être plus proche de $t_{deb}(PSi)$, l'idéal étant que $t_{deb}(PSi)$ tombe en deçà de $t^Q_{max}$.

La figure 10 montre qu'en déplaçant les tâches Q et X respectivement dans les positions $PS_{i-1}$ et PSj, la probabilité que l'instant $t_{deb}(PS_{i-1})$ tombe dans la l'intervalle [$t^X_{min}$, $t^X_{max}$] est plus grande que la probabilité qu'avait l'instant $t_{deb}(P_{si})$ de tomber dans ce même intervalle, car $t_{deb}$ croit systématiquement avec le rang de la position PS. La figure montre que l'extrémité $t^X_{max}$ du segment correspondant à la tâche X s'est rapprochée d'un intervalle d'exécution, celui qui commence à l'instant $t_{deb}(PS_{i-1})$, et a donc plus de chances d'avoir une intersection avec un tel intervalle.

D'autre part, l'extrémité $t^Q_{max}$ du segment correspondant à la tâche Q a des chances non nulles d'avoir une intersection avec le rectangle représentant l'intervalle d'exécution commençant à l'instant $t_{deb}(PSi)$. Par conséquent, la nouvelle permutation a plus de chance que l'ancienne de satisfaire toutes les contraintes et il est donc utile d'essayer cette nouvelle permutation. Dans l'exemple représenté, $t_{deb}(PS_{i-1})$ tombe au-delà de $t_{max}$, il y a donc encore un conflit pour la tâche X. Il est donc nécessaire de faire encore une ou plusieurs autres modifications de la permutation courante.

Dans cet exemple, $t_{deb}(PS_i)$ tombe au-delà de $t^Q_{max}$ donc il y a aussi un conflit pour la tâche Q après le déplacement. Mais dans d'autres exemples correspondant au cas $\alpha$ il peut arriver que les contraintes portant sur X, et celles portant sur Q, soient satisfaites simultanément. Par conséquent il est utile de vérifier toute nouvelle permutation correspondant au cas $\alpha$.

Dans le cas $\bar{\alpha}$, au contraire, d'autres vérifications sont nécessaires avant de pouvoir conclure que la tâche Q est une tâche candidate intéressante. Le procédé consiste alors à réaliser l'étape E26. Celle-ci consiste à comparer l'instant $t^Q_{fin}$ de la fin d'exécution de la tâche Q, à l'instant $t^X_{max}$ qui est la borne supérieure de l'intervalle où doit commencer l'exécution de la tâche X. Si $t^Q_{fin} \geq t^X_{max}$, ce cas est noté $\beta$, et le procédé consiste ensuite à réaliser l'étape E30 qui déplace la tâche Q et l'insère après la tâche X. Le cas contraire est noté $\bar{\beta}$. D'autres vérifications sont nécessaires avant de pouvoir conclure que la tâche Q est une tâche candidate intéressante.

Les figures 11 et 12 illustrent le cas $\beta$. La figure 11 représente une tâche X dans la position $PS_i$ et une tâche Q dans la position PSj, telles que le cas $\bar{\alpha}$ et le cas $\beta$ sont réalisés : l'instant $t^Q_{fin}$ de la fin d'exécution de la tâche Q, c'est-à-dire l'instant $t_{fin}(PSj)$ imposé par la position PSj de Q dans la permutation courante, est situé au-delà de l'instant $t^X_{max}$.

La figure 12 montre qu'en déplaçant les tâches Q et X respectivement dans les positions $PS_{i-1}$ et PSj, la probabilité que l'instant $t_{deb}(PS_{i-1})$ tombe dans l'intervalle [$t^X_{min}$, $t^X_{max}$] est plus grande que la probabilité qu'avait l'instant $t_{deb}(PSi)$ de tomber dans ce même intervalle, car $t_{deb}$ croit systématiquement avec le rang de la position PS. Par ailleurs, l'instant $t^Q_{fin}= t_{fin}(PSj)$ est au-delà de la borne $t^X_{max}$ et il n'y a pas de conflit. Ceci signifie que $t^Q_{max}$ est soit supérieur à $t^X_{max}$, soit un peu inférieure à $t^X_{max}$, en étant au plus à une distance égale à l'intervalle [$t_{deb}(PSj)$, $t_{fin}(PSj)$]. Il y a donc quelques chances que $t^Q_{max}$ soit supérieur à $t^X_{max}$, et donc ce cas, il y a quelques chances que $t^Q_{max}$ tombe au-delà de $t_{deb}(PSi)$ après le déplacement. Il est donc utile d'essayer une permutation correspondant au cas $\beta$, ce n'est pas forcément du temps perdu.

Dans l'exemple représenté sur la figure 12, le déplacement de Q et X ne suffit pas pour que toutes les contraintes sur Q et X soient satisfaites. Il sera nécessaire de modifier un peu plus la permutation courante.

Dans le cas $\bar{\beta}$, l'étape E27 consiste à comparer l'instant $t^Q_{max}$ qui est la borne supérieure de l'intervalle de temps où doit commencer l'exécution de la tâche Q, à l'instant $t^X_{max}$ qui est la borne supérieure de l'intervalle de temps où doit commencer l'exécution de la tâche X. Si $t^Q_{max} > t^X_{max}$, ce cas est noté $\eta$, et le procédé consiste, alors ensuite à réaliser une étape E28. Le cas contraire est noté $\bar{\eta}$, et le procédé consiste alors à réitérer l'étape E23 car la tâche candidate Q n'a aucune chance d'être intéressante.

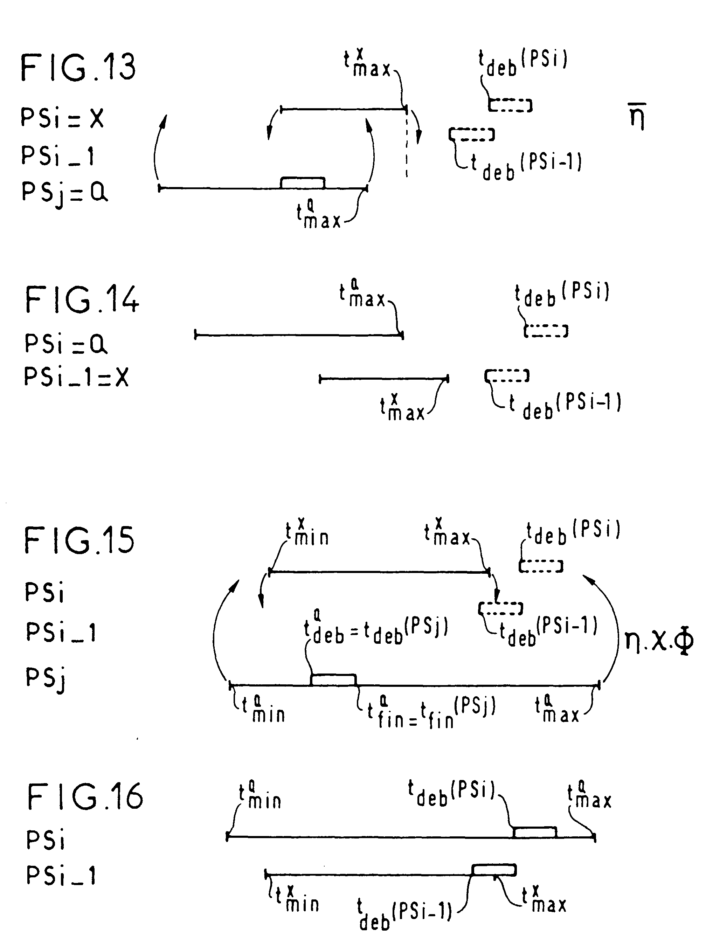

Les figures 13 et 14 illustrent par un exemple le cas $\bar{\eta}$. Dans cet exemple, la borne $t^Q_{max}$ est strictement inférieure à l'instant $t^X_{max}$.

La figure 13 représente les tâches X et Q déplacées respectivement dans les positions $PS_{i-1}$ et $P_{si}$. Cette figure montre que l'instant $t^Q_{max}$ devient plus proche de l'instant $t^{(PSi)}_{deb}$ qu'il n'était de l'instant $t^{(PSj)}_{deb}$ mais la tâche Q n'a aucune chance de pouvoir être exécutée car $t^Q_{max}$ est encore plus éloigné de $t^{(PSi)}_{deb}$ que ne l'était $t^Q_{max}$. Puisque

la tâche Q a 100 % de chances d'être mal placée, il est inutile d'essayer une telle modification de la permutation courante, c'est pourquoi l'étape suivante est une étape E23 de recherche d'une autre tâche candidate pour un déplacement.

Dans le cas $\eta$, l'étape E28 consiste à comparer l'instant $t^Q_{min}$ qui est la borne inférieure de l'intervalle dans lequel doit commencer l'exécution de la tâche Q, avec l'instant $t^X_{min}$ qui est la borne inférieure de l'intervalle de temps dans lequel doit commencer l'exécution de la tâche X.

Le but de cette étape E28 est de vérifier que la tâche Q est placée avant la tâche courant X dans la suite MIN-SUITE, pour pouvoir déplacer la tâche Q après la tâche X. Dans le cas contraire, noté $\bar{\alpha}$, l'étape suivante est une étape E23 de recherche d'une autre tâche candidate pour un déplacement.

Dans le cas $\chi$, l'étape suivante est une étape E29 déplaçant la tâche Q après la tâche X; puis une étape E22 est réitérée pour vérifier si toutes les contraintes portant sur les tâches de la couche courante sont satisfaites.

La figue 15 illustre un exemple où les cas $\alpha$, $\beta$, $\chi$, $\eta$, sont réalisées simultanément.

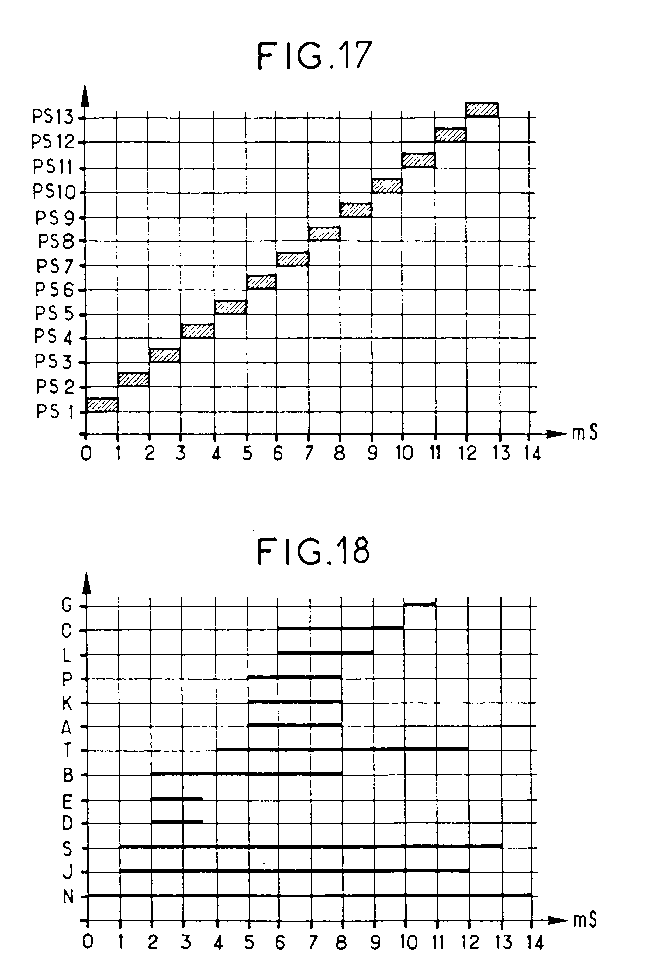

La figure 16 représente les tâches X et Q déplacées respectivement dans les positions PSi-1 et PSi, dans un exemple où les contraintes sont telles qu'elles sont effectivement satisfaites après ce déplacement : $t_{deb}(PSi)$ tombe dans l'intervalle $[t^Q_{min}, t^Q_{max}]$ et $t_{deb}(PSi-1)$ tombe dans l'intervalle $[t^X_{min}, t^X_{max}]$.

Les figures 17 à 26 illustrent la réalisation de l'étape E2 pour ordonnancer un exemple de couche comportant 13 tâches: A, B, C, D, E, G, J, K, L, N, P, S, T.

La figure 17 représente sur une échelle de temps de O à 14 ms, la position des intervalles d'exécution correspondant respectivement à 13 positions PS1, ..., PS13. Les tâches sort exécutées dans l'ordre des positions PS1, ..., PS13, et chaque intervalle d'exécution a une durée égale à 1 ms.

Chaque tâche doit satisfaire une ou plusieurs contraintes qui résultent en une seule contrainte : le début de l'intervalle d'exécution (rectangle noir sur la figure 17) doit être situé dans un intervalle de temps donné (segments noirs sur la figure 18). Dans un cas limite il peut commencer à la borne supérieure.

L'étape E21 consiste à déterminer la suite MIN-SUITE constituée de toutes les tâches de la couche courante, ordonnées selon les valeurs croissantes de la borne inférieure $t_{min}$.

MIN-SUITE = N, J, S, D, E, B, T, A, K, P, L, C, G.

Sur la figure 18 les 13 tâches sont représentées dans l'ordre de MIN-SUITE, selon le sens d'orientation de l'axe des ordonnées. Pour maximiser la probabilité d'arriver rapidement à trouver une permutation qui satisfasse toutes les contraintes portant sur les tâches de la couche considérée, la permutation dite initiale qui sera vérifiée en premier sera celle constituée par MIN-SUITE; et celles qui seront vérifiées ensuite, en cas d'échec, seront déduites de MIN-SUITE par des modifications successives.

D'autre part, l'étape E21 consiste à déterminer la suite MAX-SUITE, constituée de toutes les tâches de la couche courante, ordonnées selon les valeurs de $t_{max}$ croissantes. Cette suite sera utilisée pour appliquer le second principe énoncé précédemment, lorsqu'il faudra modifier la permutation initiale. Dans cet exemple,

MAX-SUITE = N, S, J, T, G, C, L, B, P, K, A, D, E.

Puis une étape E22 consiste à vérifier la permutation courante, c'est-à-dire vérifier si elle satisfait toutes les contraintes portant sur les tâches de la couche considérée. Au début de l'étape E2, la permutation courante est constituée par la permutation initiale déterminée par l'étape E21.

La vérification est faite successivement pour chaque tâche, dans l'ordre de la permutation courante : N, J, S, D, E, ..., G. Si la vérification est positive pour une tâche celle-ci est considérée comme bien placée dans la permutation, mais son placement peut être remis en cause ultérieurement si cela est nécessaire pour satisfaire d'autres contraintes.

La comparaison des figures 17 et 18 permet de conclure qu'il n'y a pas de problème pour exécuter les tâches N,J,S, et D, respectivement pendant les intervalles d'exécution représentés sur la figure 17. Elles sont donc considérées comme bien placées. La permutation courante est :

N̲ J̲ S̲ D̲ E B T A K P L C G

où les tâches considérées comme bien placées sont soulignées.

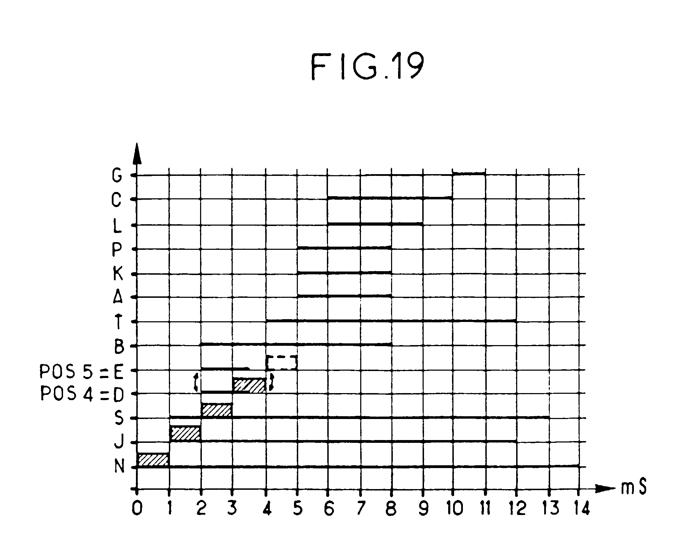

La figure 19 illustre le premier conflit rencontré au cours de la vérification de la permutation initiale. Sur la figure 19, des rectangles noirs représentent des intervalles d'exécution pour lesquels il n'y a pas de conflit entre les contraintes, et un rectangle blanc en pointillés représente l'intervalle d'exécution qui est cause d'un conflit. Il correspond à la position PS5, occupée actuellement par la tâche E. Cet intervalle d'exécution n'a aucun point commun avec l'intervalle dans lequel doit commencer l'exécution de la tâche E. L'étape E23 consiste alors à rechercher dans la suite MAX-SUITE une tâche précédant la tâche E, c'est-à-dire telle que la borne $t_{max}$ a une valeur plus élevée.

MAX-SUITE = N, S, J, T, G, C, L, B, P, K, A, D, E.

L'étape E23 trouve la tâche D. L'étape E24 vérifie qu'elle est considérée comme bien placée, en vérifiant qu'elle a un rang inférieur au rang de la tâche courante E, dans la permutation courante. Puis l'étape E25 tire une conclusion $\bar{\alpha}$. Puis l'étape E26 tire une conclusion $\beta$. L'étape E29 déplace alors D dans la position POS5 et E recule dans la position POS4. L'étape E22 vérifie que les contraintes portant sur E et les tâches suivantes sont satisfaites mais constate que les contraintes portant sur D ne sont plus satisfaites. La permutation essayée ne convient pas. Elle n'est pas retenue comme nouvelle permutation courante.

Comme le montre la figure 19, cette modification ne pouvait pas être un succès car l'intervalle correspondant à D a une borne supérieure qui n'est pas supérieure à celle de l'intervalle correspondant à E. Ils sont mêmes strictement identiques. Pour éviter de vérifier inutilement de nouvelles permutations il est possible de prendre des précautions lors de la constitution de MAX-SUITE, au cours de l'étape E21 :

Lorsque deux tâches de la même couche ont pour contrainte un même intervalle de temps $[t_{min}, t_{max}]$, il est possible de les mettre dans deux positions différentes respectivement dans la suite MIN-SUITE qui constitue la permutation initiale, et dans la suite MAX-SUITE. Dans l'exemple illustré sur les figures 17 à 26, il y a au moins deux possibilités pour constituer la suite MAX-SUITE puisqu'il est possible de permuter D et E :

N, S, J, T, G, C, L, B, P, K, A, E, D

ou      N, S, J, T, G, C, L, B, P, K, A, D, E.

Il aurait été préférable de choisir l'ordre E, D qui est l'ordre inverse de l'ordre D, E dans lequel elles sont prises pour constituer la permutation initiale

MIN-SUITE = N, J, S, D, E, B, T, A, K, P, L, C, G.

L'étape E23 trouverait alors comme tâche candidate successivement : A, K, P, B, L, C, G, T, J; et l'étape E24 retiendrait la tâche J.

On démontre qu'en règle générale, si les tâches de la couche à ordonner n'ont à satisfaire que des contraintes du type délais, il est préférable de placer dans un ordre inverse, SUITE, toutes les tâches ayant le même intervalle $[t_{min}, t_{max}]$ quel que soit leur nombre. Par contre, s'il y a à la fois des contraintes de type délais et des contraintes de type après, il est préférable de les placer dans un même ordre.

Considérons la suite de cet exemple, en conservant le choix initial de MAX-SUITE :

N, S, J, T, G, C, L, B, P, K, A, P.

La permutation courante est :

N̲ J S̲ E̲ D B T A K P L C G

Après cette tentative malheureuse de modification de la permutation, l'étape E23 trouve comme tâche candidate successivement A, K, P, B, L, C, G, T, qui sont rejetées par l'étape E24. Puis l'étape E23 trouve la tâche J.

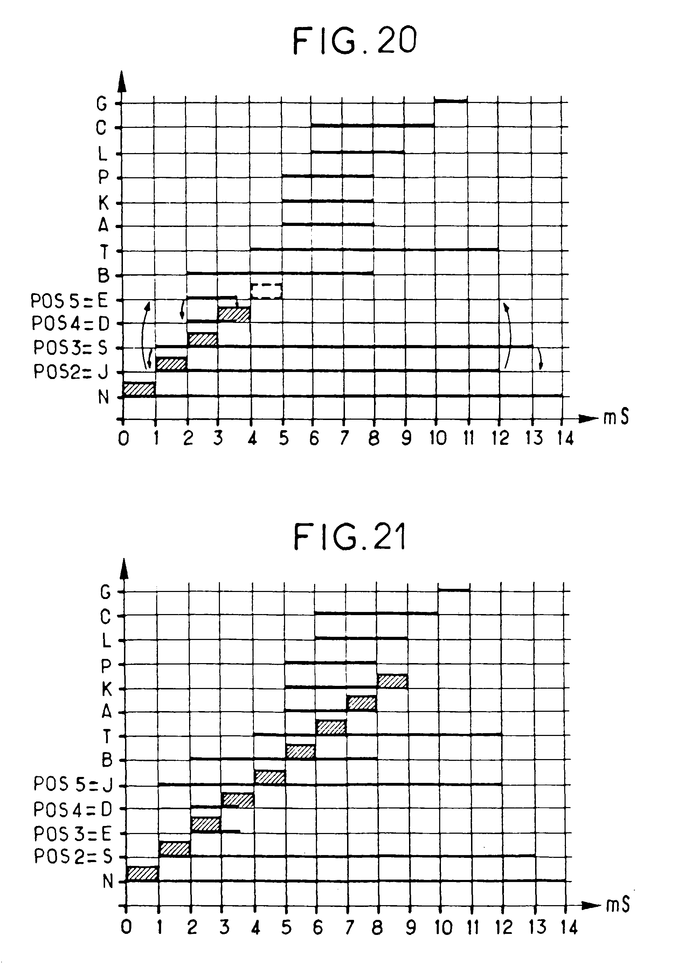

La figure 20 illustre cette nouvelle tentative de modification. L'étape E24 vérifie que la tâche J est considérée comme bien placée. L'étape E25 arrive à la conclusion $\bar{\alpha}$ . L'étape E26 arrive à la conclusion $\bar{\beta}$ . Les étapes E27 et E28 arrivent à la conclusion η et χ. Par conséquent l'étape E29 place la tâche J dans la position PS5, à la place de E. Les tâches E, D et S reculent d'une place, S se trouvant dans la position PS2, D dans la position PS3, et E dans la position PS4. Les autres tâches ne changent pas de place.

L'étape E22 consiste à vérifier ensuite que les tâches qui ont été déplacées vérifient toutes les contraintes portant sur elles, en commençant par la tâche de rang le plus bas parmi celles déplacées : S, puis E, puis D, puis J. Elle vérifie ensuite qu'il n'y a pas de conflit entre les contraintes successivement pour les tâches B, T, A, K.

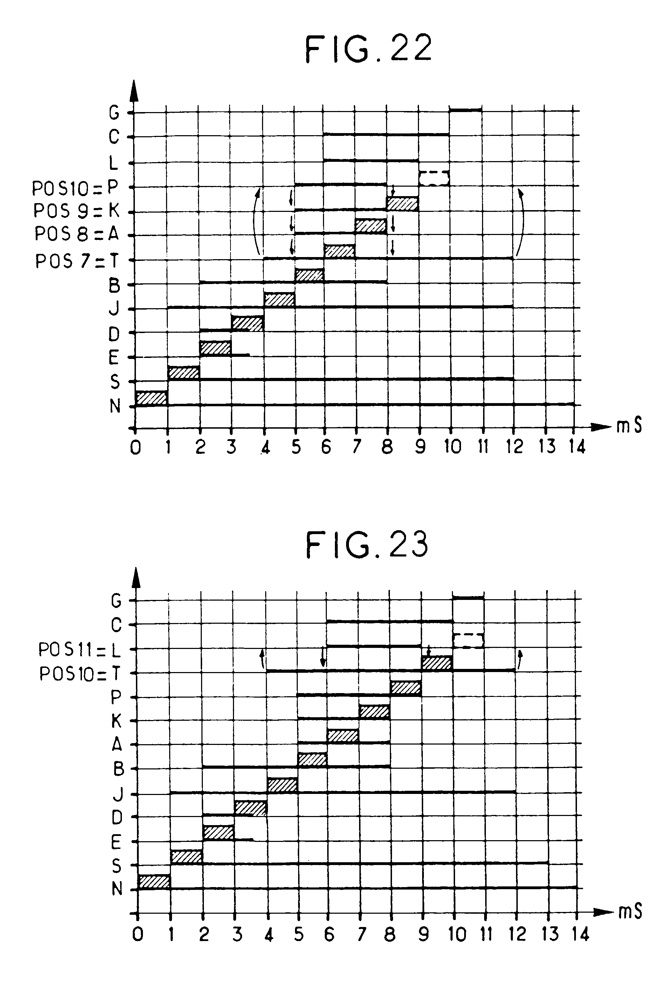

La figure 21 illustre la nouvelle permutation courante. Il est à remarquer que pour la tâche K l'intervalle d'exécution commence à l'instant exact où se termine l'intervalle dans lequel doit commencer l'exécution de la tâche K. Il n'y a pas de conflit, mais les contraintes sont satisfaites de justesse. L'état de la permutation courante est :

N̲, S̲, E̲, D̲, J̲, B̲, T̲, A̲, K̲, P, L, C, G.

La figure 22 montre qu'il apparaît un conflit pour la tâche P. L'étape E23 est alors réitérée pour déterminer dans la suite MAX-SUITE la tâche précédant immédiatement la tâche P dans cette suite. Elle trouve la tâche B. L'étape E24 vérifie que la tâche B fait partie des tâches qui sont considérées comme bien placées. Les étapes E25 et E26 tirent les conclusions $\bar{\alpha}$ puis $\bar{\beta}$ . L'étape E27 est alors réalisée. Celle-ci constate que $t^B_{max} = t^P_{max}$, par conséquent elle en tire la conclusion $\bar{\eta}$ . L'étape E23 est alors réitérée pour rechercher une autre tâche candidate dans la suite MAX-SUITE. En effet, le segment représentant l'intervalle de temps correspondant à B n'aurait aucun point d'intersection avec l'intervalle d'exécution [ 9 ms, 10ms] correspondant à la position POS10, si la tâche B était déplacée à cette position. Par conséquent les contraintes portant sur B ne seraient pas satisfaites.

L'étape E23 trouve alors successivement les tâches L, C, G mais l'étape E24 les rejette car elles ne sont pas considérées comme bien placées dans la permutation. Finalement les étapes E23 et E24 trouvent la tâche T. Les étapes E25 à E28 tirent successivement les conclusions $\bar{\alpha}$, $\bar{\beta}$, η, χ. L'étape E29 déplace T à la position POS10. Les tâches P, K, A reculent respectivement dans les positions POS9, POS8, POS7.

L'étape E22 vérifie ensuite que les contraintes portant sur les tâches déplacées A, K, P, T, et les suivantes, sont satisfaites. La nouvelle permutation courante est :

N̲, S̲, E̲, D̲, J̲, B̲, A̲, K̲, P̲, T̲, L, C, G

Comme le montre la figure 23, l'étape E22 constate ensuite que les contraintes portant sur la tâche L ne sont pas satisfaites.

L'étape E23 trouve ensuite la tâche T et l'étape E24 vérifie qu'elle est considérée comme bien placée. L'étape E25 et les suivantes peuvent donc être exécutées. Elles tirent les conclusions $\bar{\alpha}$, puis $\bar{\beta}$, puis η et χ. L'étape E29 peut alors être exécutée. Elle place la tâche T dans la position PS 11 qui était occupée par la tâche L. La tâche L recule d'une place. L'étape E22 vérifie que les contraintes portant sur les tâches déplacées L et T sont satisfaites. Par conséquent la permutation courante devient :

N̲, S̲, E̲, D̲, J̲, V̲, A̲, K̲, P̲, L̲, T̲, C, G

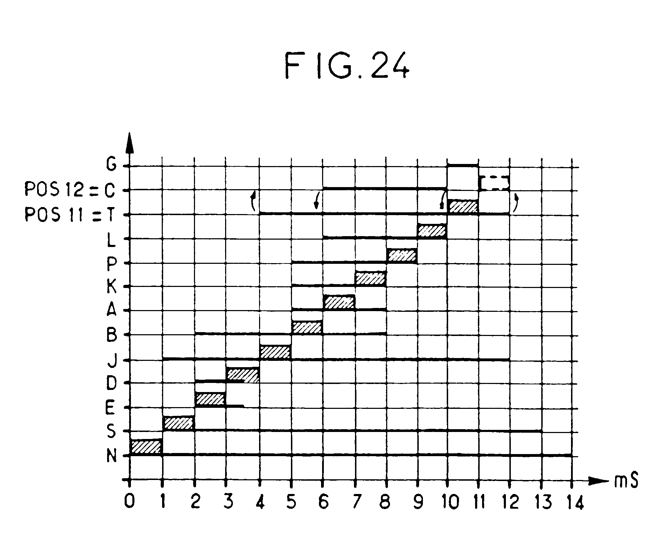

Comme le montre la figure 24, il y a un conflit entre les contraintes portant sur la tâche C. L'étape E23 détermine la tâche précédant la tâche C dans la suite MAX-SUITE. Elle trouve la tâche G mais l'étape E24 constate que cette tâche G n'est pas considérée comme bien placée dans la permutation. L'étape E23 est réitérée et elle détermine une autre tâche, T, précédant la tâche C dans la suite MAX-SUITE. L'étape E24 vérifie que la tâche T est considérée comme bien placée dans la permutation. L'étape E25 tire la conclusion $\alpha$ puisque $t^T_{deb} = t^C_{max}$. L'étape E29 est donc réalisée immédiatement et elle place donc la tâche T après la tâche .C dans la permutation, ce qui revient à permuter les positions de C et de T. L'étape E22 vérifie ensuite que toutes les contraintes portant sur les tâches déplacées C et T sont satisfaites.

La nouvelle permutation courante est :

N̲, S̲, E̲, D̲, J̲, B̲, A̲, K̲, P̲, L̲, C̲, T, G

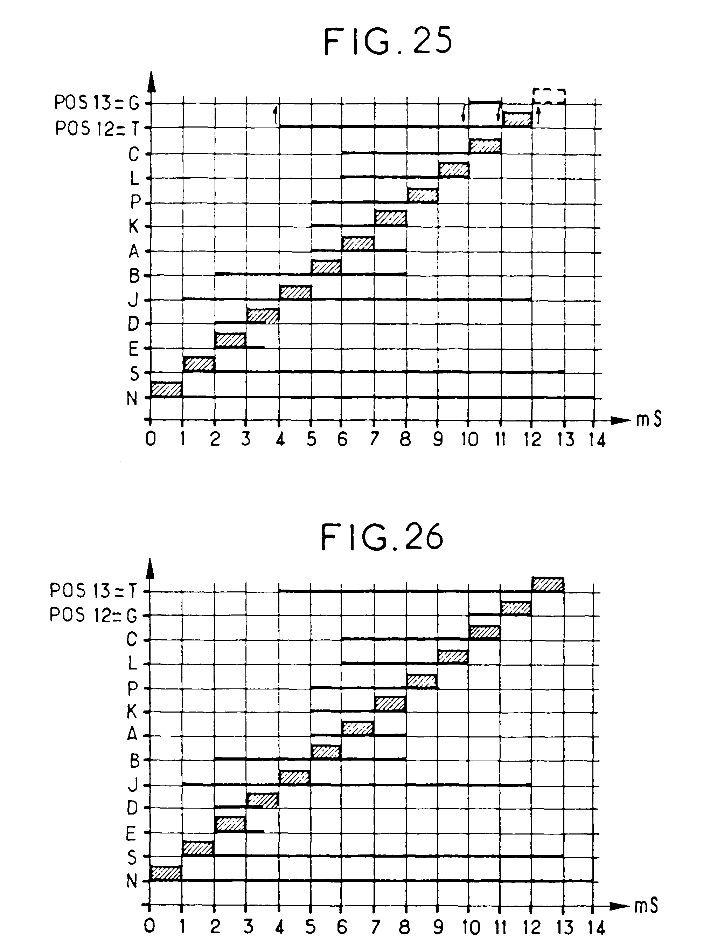

Comme le montre la figure 25, l'étape E22 constate qu'il y a un conflit entre les contraintes portant sur la tâche G. L'étape E23 détermine une tâche, T, qui précède la tâche G immédiatement dans la suite MAX-SUITE. L'étape E24 vérifie que la tâche T est considérée comme bien placée dans la permutation. L'étape E25 tire la conclusion a puisque $t^T_{deb} = t^G_{max}$. L'étape E29 déplace T après G dans la permutation, ce qui revient à permuter T et G. Puis l'étape E22 vérifie que toutes les contraintes portant sur les tâches déplacées G et T sont satisfaites. La nouvelle permutation courante est :

N̲, S̲, E̲, D̲, J̲, B̲, A̲, K̲, P̲, L̲, C̲, G̲, T̲.

Toutes les tâches sont considérées comme bien placées car toutes les contraintes sont satisfaites, comme le montre la figure 26, par conséquent la réalisation de l'étape E2 se termine par un succès S.

## Revendications

**1.** Procédé pour ordonnancer des tâches successives (ID1, ..., ID20) au moyen d'un ordinateur (OR), ces tâches ne subissant que des contraintes du type délais; une tâche du type délais consistant en ce que l'instant $t^K_{deb}$ de début d'exécution doit être compris dans au moins un intervalle de temps $[t^K_{min}, t^K_{max}]$ prédéterminé par rapport à un instant de référence absolue (DM);

caractérisé en ce qu'il consiste, successivement et dans cet ordre, à :

- calculer (E6), pour chaque tâche, les bornes $t_{min}$ et $t_{max}$ de l'intervalle où doit commencer l'exécution de cette tâche;
- constituer (E21) une première suite (MIN-SUITE) dans laquelle toutes les tâches sont ordonnées selon les valeurs de $t_{min}$ croissantes;
- constituer (E21) une seconde suite (MAX-SUITE) dans laquelle toutes les tâches sont ordonnées selon les valeurs de $t_{max}$ croissantes;
- constituer (E21) une permutation dite initiale en ordonnant toutes les tâches dans l'ordre de la première suite (MIN-SUITE);
- vérifier (E22) si la permutation initiale satisfait toutes les contraintes portant sur les tâches;
- conclure (S) que l'ordonnancement est un succès si toutes les contraintes sont satisfaites;
- sinon, déterminer (E22) dans la permutation initiale la première tâche (X), dite mal placée, pour laquelle une contrainte n'est pas satisfaite;
- déterminer (E23, E24) dans la seconde suite (MAX-SUITE) une tâche dite candidate (Q) qui précède immédiatement la tâche mal placée (X), dans cette seconde suite, et qui précède aussi la tâche mal placée (X), dans la permutation courante;
- vérifier (E25, ..., E29, E22) que, si la tâche candidate (Q) est déplacée dans la permutation courante pour être placée immédiatement après la tâche mal placée (X), toutes les contraintes portant sur toutes les tâches ainsi déplacées sont alors satisfaites; et

-- si au moins une contrainte n'est pas satisfaite, conclure (R) que la tâche candidate ne convient pas, puis déterminer (E23, E24) dans la seconde suite (MAX-SUITE) une autre tâche candidate et réitérer la vérification précédente (E25, ..., E29, E22); et si, ce n'est pas possible, conclure (F) que l'ordonnancement à échoué;
-- si toutes les contraintes sont satisfaites, conclure (S) que l'ordonnancement est un succès.

**Patentansprüche**

1. Verfahren für die Ablauffolgeplanung von aufeinanderfolgenden Aufgaben (ID1, ..., ID20) mit Hilfe eines Computers (OR), wobei diese Aufgaben lediglich Zeitzwangsbedingungen unterliegen; wobei eine Zeitzwangsaufgabe darin besteht, dass der Ausführungs-Anfangszeitpunkt $t^K_{deb}$ in wenigstens einem Zeitintervall $[t^K_{min}, t^K_{max}]$ enthalten sein soll, das in Bezug auf einen absoluten Referenzzeitpunkt (DM) vorgegeben ist; dadurch gekennzeichnet, dass es darin besteht, nacheinander und in dieser Reihenfolge

   - für jede Aufgabe die Grenzen $t_{min}$ und $t_{max}$ des Zeitintervalls zu berechnen (E6), wo die Ausführung dieser Aufgabe beginnen soll;
   - eine erste Folge (MIN-SUITE) zu bilden (E21), in der alle Aufgaben nach aufsteigenden Werten von $t_{min}$ geordnet sind;
   - eine zweite Folge (MAX-SUITE) zu bilden (E21), in der alle Aufgaben nach aufsteigenden Werten von $t_{max}$ geordnet sind;
   - eine sogenannte Initialpermutation zu bilden (E21), indem alle Aufgaben in der Ordnung der ersten Folge (MIN-SUITE) geordnet werden;
   - zu überprüfen (E22), ob die Initialpermutation alle die Aufgaben betreffenden Zwangsbedingungen erfüllt;
   - zu folgern (S), dass die Ablauffolgeplanung erfolgreich ist, wenn alle Zwangsbedingungen erfüllt sind;
   - sonst die erste sogenannte schlecht plazierte Aufgabe (X) in der Initialpermutation zu ermitteln (E22), für die eine Zwangsbedingung nicht erfüllt ist;
   - in der zweiten Folge (MAX-SUITE) eine sogenannte Kandidatenaufgabe (Q) zu bestimmen (E23, E24), die der schlecht plazierten Aufgabe (X) in dieser zweiten Folge unmittelbar vorangeht und die der schlecht plazierten Aufgabe (X) auch in der laufenden Permutation vorangeht;
   - zu überprüfen (E25, ..., E29, E22), ob, wenn die Kandidatenaufgabe (Q) in der laufenden Permutation unmittelbar hinter die schlecht plazierte Aufgabe (X) verschoben wird, alle Zwangsbedingungen, die die so verschobenen Aufgaben betreffen, erfüllt sind; und

   -- wenn wenigstens eine Zwangsbedingung nicht erfüllt ist, zu folgern (R), dass die Kandidatenaufgabe (Q) ungeeignet ist, und dann in der zweiten Folge (MAX-SUITE) eine andere Kandidatenaufgabe zu bestimmen und die vorangehende Überprüfung (E25, ..., E29, E22) zu wiederholen, und, wenn dies nicht möglich ist, zu folgern (F), dass die Ablauffolgeplanung gescheitert ist;
   -- wenn alle Zwangsbedingungen erfüllt sind, zu folgern (S), dass die Ablauffolgeplanung erfolgreich ist.

**Claims**

1. Method for scheduling successive tasks (ID1, ..., ID20) by means of a computer (OR), said tasks being subject only to timing constraints, a delay task consisting in the fact that the execution start time $t^K_{st}$ be in at least one predetermined time interval $[t^K_{min}, t^K_{max}]$ relative to an absolute reference time (DM); characterized in that it comprises, in successive steps in this order,:

   - calculating (E6) for each task upper and lower limits $t_{min}$ and $t_{max}$ of the interval in which execution of that task must start;
   - constructing (E21) a first series (MIN-SERIES) in which all said tasks are scheduled in increasing order of their lower limit $t_{min}$;
   - constructing (E21) a second series (MAX-SERIES) in which all said tasks are scheduled in increasing order of their upper limit $t_{max}$;
   - constructing (E21) an initial permutation by scheduling all said tasks in the order of said first series (MIN-SERIES);
   - verifying (E22) if said initial permutation satisfies all said constraints applying to said tasks;
   - concluding (S) that the scheduling succeeds if all said constraints are satisfied;
   - otherwise, determining (E22) in said initial permutation the first ill-placed task (X) for which a constraint is not satisfied;
   - determining (E23, E24) in said second series (MAX-SERIES) a candidate task (Q) immediately preceding said ill-placed task (X) in said second series that also precedes said ill-placed task (X) in said current permutation;
   - verifying (E25, ..., E29, E22) that if said candidate task (Q) is shifted in said current permutation to a position immediately after said ill-placed task (X) all said constraints applying to all said tasks shifted in this way are then satisfied; and

- if at least one constraint is not satisfied, concluding (R) that said candidate task is not suitable and then determining (E23, E24) in said second series (MAX-SERIES) another candidate task and repeating the previous verification (E25, ..., E29, E22); and, if this is not possible, concluding (F) that the scheduling fails;
- if all said constraints are satisfied, concluding (S) that the scheduling succeeds.

# FIG.1

OR

SY

$ID_K, R_L, T_K$

PER

FIG.2

FIG.3

# FIG.4

# FIG.5

# FIG.6

$t_{deb}^A = t_0$

$\delta^A$

IDA

$t_{deb}^B = t_{deb}^A + \delta^A$

$t$

IDB

$t_{max}^A$

$t_{min}^A = t_{min}^B$

$t_{max}^B$

# FIG.7

$t_{deb}^A = t_{deb}^B + \delta^B$

IDA

$t$

$t_{max}^A$

IDB

$\delta^B$

$t_{min}^A = t_{min}^B$

$t_{deb}^B = t_0$

$t_{max}^B$

# FIG.8

# F I G.9

PSi = X
PSi _ 1
PSj = Q

$t^{x}_{max}$

$t_{deb}^{(PSi)}$

$t_{deb}^{(PSi-1)}$

α

$t^{Q}_{deb} = t_{deb}^{(PSj)}$

$t^{Q}_{max}$

# F I G.10

PSi = Q
PSi _ 1 = X

$t^{Q}_{min}$

$t^{Q}_{max}$

$t_{deb}^{(PSi)}$

$t_{max}$

$t_{deb}^{(PSi-1)}$

# F I G.11

PSi = X
PSi _ 1
PSj = Q

$t^{x}_{max}$

$t_{deb}^{(PSi)}$

β

$t_{deb}^{(PSj)}$

$t_{deb}^{(PSi-1)}$

$t^{Q}_{fin} = t_{fin}^{(PSj)}$

$t^{Q}_{max}$

# F I G.12

PSi = Q
PSi _ 1 = X

$t^{Q}_{min}$

$t^{Q}_{max}$

$t_{deb}^{(PSi)}$

$t^{x}_{min}$

$t^{x}_{max}$

$t_{deb}^{(PSi-1)}$

FIG.13

$PSi = X$
$PSi\_1$
$PSj = Q$

$t_{max}^{X}$
$t_{deb}^{}(PSi)$
$t_{deb}^{}(PSi-1)$
$t_{max}^{Q}$
$\overline{\eta}$

FIG.14

$PSi = Q$
$PSi\_1 = X$

$t_{max}^{Q}$
$t_{deb}^{}(PSi)$
$t_{max}^{X}$
$t_{deb}^{}(PSi-1)$

FIG.15

$PSi$
$PSi\_1$
$PSj$

$t_{min}^{X}$
$t_{max}^{X}$
$t_{deb}^{}(PSi)$
$t_{deb}^{}(PSi-1)$
$t_{deb}^{Q} = t_{deb}^{}(PSj)$
$\eta.X.\Phi$
$t_{min}^{Q}$
$t_{fin}^{Q} = t_{fin}^{}(PSj)$
$t_{max}^{Q}$

FIG.16

$PSi$
$PSi\_1$

$t_{min}^{Q}$
$t_{deb}^{}(PSi)$
$t_{max}^{Q}$
$t_{min}^{X}$
$t_{deb}^{}(PSi-1)$
$t_{max}^{X}$

# FIG.17

# FIG.18

# FIG.19

# FIG. 20

# FIG. 21

# FIG.22

# FIG.23

# F IG.24

# FIG. 25

# FIG. 26